# FASCICULE DE BREVET EUROPEEN

(11) **EP 0 551 045 B1**
(45) Date de publication et mention de la délivrance du brevet: **27.03.1996**
(21) Numéro de dépôt: 92403583.5
(22) Date de dépôt: 30.12.1992
(51) Int. Cl.: G01B 5/08

(54) **Dispositif de contrôle de dimensions d'un objet, en particulier de diamètres extérieurs ou intérieurs de pièces mécaniques**
Vorrichtung zur Kontrolle der Abmessungen eines Objektes, insbesondere des externen oder internen Durchmessers eines mechanischen Teils
Device for controlling the dimensions of an object, in particular the external or internal diameters of mechanical pieces

(30) Priorité: 06.01.1992 FR 9200036
(43) Date de publication de la demande: 14.07.1993
(73) Titulaire: SOCIETE INDUSTRIELLE DE LIAISONS ELECTRIQUES - SILEC, F-75008 Paris (FR)
(72) Inventeur: Hainneville, Lucien, F-14400 Bayeux (FR)
(74) Mandataire: Jaunez, Xavier

(56) Documents cités:
- EP-A- 0 181 460
- EP-A- 0 292 767
- US-A- 4 559 717
- US-A- 4 881 324

## Description

La présente invention concerne le contrôle de dimensions d'un objet, en particulier de diamètres extérieurs ou intérieurs de pièces mécaniques et plus spécialement un dispositif de contrôle du type comportant une partie formant support, ainsi qu'un système déformable élastiquement monté sur le support et comportant deux bras de mesure aux extrémités libres desquels est prévu une touche destinée à rentrer en contact avec la pièce à contrôler, ce système déformable coopérant avec un capteur de déplacement associé, conformément au préambule de la revendication 1.

Un dispositif de contrôle de ce type est par exemple illustré dans le document EP-A-0 181 460.

Le dispositif de contrôle décrit dans le document EP-A-0 181 460 est un dispositif à deux unités en U indépendantes, chaque unité ayant trois bras de mesure articulés sur une base commune : un capteur d'écartement est alors associé à un bras de chaque paire de bras, selon deux tiges plongeuses agencées pour se déplacer selon une direction axiale essentiellement parallèle à l'axe des touches, et ce pour chaque unité, la mesure se faisant par comparaison des signaux correspondants.

D'autres variantes toujours basées sur le principe d'un U déformable,.entre les branches duquel est monté un transducteur différentiel, sont également décrites dans le document EP-A-0 292 767.

On connaît par ailleurs d'autres dispositifs de contrôle de dimensions à système déformable, comportant un élément relié aux deux bras de mesure du système déformable et agencé pour se déplacer selon une direction axiale essentiellement perpendiculaire à l'axe des touches en fonction de l'écartement mutuel desdites touches, pour coopérer avec un capteur de déplacement associé, comme illustré par exemple dans le document FR-A-2 443 047.

Ce dispositif de contrôle comporte ainsi deux bras de mesure parallèles et de section demi-cylindrique, saillant d'une embase commune : ces bras peuvent s'éloigner l'un de l'autre par flexion, de façon à contrôler des alésages grâce aux touches associées. Il n'est donc pas possible de contrôler des diamètres extérieurs avec un tel dispositif. De plus, le système déformable utilise une lame élastique en forme de V qui coopère, par l'intermédiaire d'un fil métallique, avec un transducteur différentiel : le dispositif est donc nécessairement de dimensions encombrantes, et sa précision reste limitée du fait de la longueur importante du fil de transmission de mouvement.

Un dispositif analogue est décrit dans le document US-A-4 881 324 : l'ensemble monobloc déformable concerné comporte deux ponts élastiques pour la liaison directe du support de transducteur mobile axialement aux deux bras de mesure, et quatre ponts élastiques formant un parallélogramme articulé.

L'état de la technique peut être enfin illustré par les documents US-A-3.958.337 et US-A-3.958.338, qui décrivent des jauges analogues spécialement conçues pour le contrôle d'alésages de petits diamètres. De telles jauges restent cependant de structure complexe et de fabrication onéreuse.

L'invention a pour objet de réaliser un dispositif de contrôle ne présentant pas les inconvénients et/ou limitations précités.

L'invention a. également pour objet de concevoir un dispositif dont la structure permette de contrôler aussi bien des diamètres extérieurs que des alésages, tout en étant de précision élevée dans les deux cas.

L'invention a aussi pour objet de réaliser un dispositif de contrôle qui soit à la fois compact et aisé à monter.

Il s'agit plus particulièrement d'un dispositif de contrôle de dimensions d'un objet, en particulier de diamètres extérieurs ou intérieurs de pièces mécaniques, du type comportant une partie formant support, ainsi qu'un système déformable élastiquement monté sur le support et comportant deux bras de mesure aux extrémités libres desquels est prévue une touche destinée à rentrer en contact avec la pièce à contrôler, ce système déformable coopérant avec un capteur de déplacement associé, caractérisé en ce que le système déformable se présente sous la forme d'un élément monobloc ayant la forme générale d'un W, avec les deux bras de mesure articulés par rapport à la partie formant support et reliés par deux bras de liaison, complété à la jonction de ces bras de liaison par un bras central mobile selon une direction axiale essentiellement perpendiculaire à l'axe des touches en fonction de l'écartement mutuel desdites touches pour coopérer avec le capteur de déplacement, ledit élément monobloc étant essentiellement plat et se déformant dans son plan lors de l'écartement ou du rapprochement des touches prévues en extrémité de ses bras de mesure articulés.

Conformément à une première variante, les deux bras de mesure sont essentiellement parallèles en position neutre, et sont chacun articulés sur un bras de fixation associé qui assure la fixation de l'élément monobloc déformable à la partie formant support.

Il est alors avantageux que chaque bras de mesure soit relié par un pont élastique au bras de fixation associé : un tel mode d'exécution simplifie en effet considérablement la structure du dispositif et facilite aussi son montage.

Il est également avantageux que chaque bras de mesure présente un décrochement au niveau de son pont élastique, de façon à être adjacent au bras de fixation associé : une telle caractéristique permet en effet de réaliser un ensemble monobloc déformable particulièrement compact.

De préférence encore, l'extrémité libre du bras central est articulée sur un bras de raccordement qui est lui-même articulé sur l'un des bras de fixation, et qui porte un moyen pour coopérer avec un capteur de déplacement associé. En particulier, le bras de raccordement s'étend sensiblement perpendiculairement au bras de fixation associé et au bras central en position neutre, en étant relié à ces bras par des ponts élastiques.

La présence d'un tel bras de raccordement est particulièrement avantageuse dans la mesure où ce bras de raccordement évite d'avoir à prévoir un guidage du bras central par la partie formant support, ce qui simplifie considérablement la réalisation du dispositif.

Conformément à une deuxième variante, les deux bras de mesure, sont essentiellement rectilignes et parallèles, et sont articulés aux deux extrémités d'une branche commune de raccordement qui leur est sensiblement perpendiculaire, et qui assure la fixation de l'élément monobloc à la partie formant support.

De préférence alors, chaque bras de mesure est relié par un pont élastique à la branche commune de raccordement et de fixation.

Avantageusement aussi, l'extrémité libre du bras central est articulée sur un bras de raccordement qui est lui-même articulé sur un coin de retenue fixé à la partie formant support ; en particulier, le bras de raccordement s'étend sensiblement perpendiculairement au bras central en position neutre, en étant relié à ce bras et au coin de retenue par des ponts élastiques associés.

Avantageusement encore, et pour les deux variantes précitées, chacun des bras de liaison se raccorde au bras central par un pont élastique associé.

Les différents ponts élastiques mentionnés plus hauts sont très avantageux, car ils permettent de réaliser un ensemble déformable parfaitement monolithique, sans présence de ressorts de rappel ou de pivots d'articulation et de raccordement.

De préférence également, la partie formant support est essentiellement plate, et présente un espace central dans lequel est logé l'élément monobloc déformable. En particulier, la partie formant support se présente sous la forme d'un boîtier en plaquette, ce boîtier comportant deux branches dans lesquelles passent les extrémités libres des bras de mesure, les touches associées saillant hors de ces branches.

Un tel boîtier est donc extrêmement compact et commode à utiliser, et sa réalisation plate permet une utilisation simultanée de plusieurs dispositifs identiques, répartis le long de la pièce mécanique à contrôler.

Avantageusement alors, l'espace central de la partie formant support présente deux bords transversaux parallèles dont l'un au moins constitue une butée limitant le mouvement du bras central lors de l'écartement ou du rapprochement des touches.

De préférence encore, les bras de mesure, les bras de liaison et le bras central de l'élément monobloc admettent le plan médian de la partie formant support comme plan de symétrie, quelle que soit la déformation de cet élément monobloc. L'équilibre du dispositif est alors à tout moment respecté, ce qui garantit la constance et la fiabilité de la position neutre de repos.

Avantageusement enfin, l'élément monobloc déformable avec ses éventuels bras supplémentaires est un élément métallique obtenu, par exemple par électro-érosion, à partir d'une plaque de quelques millimètres d'épaisseur. La technique de fabrication par électro-érosion est en effet particulièrement intéressante en l'espèce, du fait de la précision requise, notamment pour la réalisation des ponts élastiques (on pourra en variante utiliser une technique de coupe au laser ou par jet d'eau à haute pression).

Selon un mode d'exécution particulier, le dispositif de contrôle comporte une pluralité d'éléments monoblocs déformables empilés successivement dans une même partie formant support. Un tel dispositif permet alors de contrôler simultanément plusieurs portées rapprochées avec un seul appareil.

D'autres caractéristiques et avantages de l'invention apparaîtront plus clairement à la lumière de la description qui va suivre et des dessins annexés, concernant un mode de réalisation particulier, en référence aux figures où :
- la figure 1 est une vue illustrant un dispositif de contrôle conforme à l'invention (le boîtier du dispositif est montré en coupe afin de mieux distinguer l'élément monobloc déformable), ici pour un contrôle de diamètre extérieur ;
- la figure 2 est une vue en plan de l'élément monobloc déformable du dispositif précédent (la position inverse des touches, illustrées en traits mixtes, rappelle que ce dispositif permet également un contrôle d'alésages) ;
- la figure 3 est une vue analogue à celle de la figure 1, illustrant une variante de réalisation du dispositif de contrôle ;
- la figure 4 est une coupe selon IV-IV de la figure 3 (la figure 3 étant la coupe selon III-III de la figure 4), permettant de mieux distinguer l'agencement successif de plusieurs (ici trois) éléments monoblocs déformables identiques logés dans un boîtier commun, ainsi que les capteurs de déplacement associés.

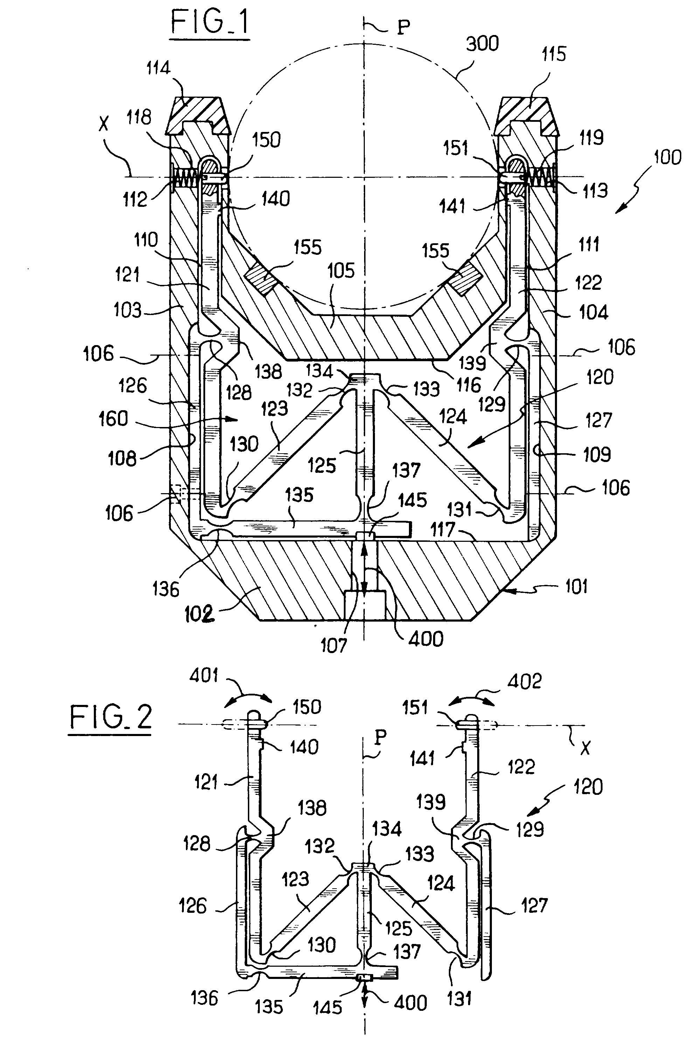

La figure 1 illustre un dispositif de contrôle 100 conforme à l'invention, dispositif qui est ici appliqué au contrôle du diamètre extérieur d'un objet cylindrique 300, par exemple d'une portée de vilebrequin, étant entendu que le contrôle dimensionnel pourra s'appliquer à d'autres types d'objets, et en particulier aux alésages de pièces mécaniques.

Le dispositif de contrôle 100 comporte d'une part une partie formant support 101, et d'autre part un système déformable élastiquement 120 monté dans ce support.

Conformément à une caractéristique essentielle de l'invention, le système déformable élastiquement se présente sous la forme d'un élément monobloc 120 qui a la forme générale d'un W, avec deux bras de mesure 121 et 122 articulés par rapport à la partie formant support 101 et reliés par deux bras de liaison 123 et 124, complété à la jonction de ces bras de liaison par un bras central 125 mobile axialement, et l'élément monobloc 120 est essentiellement plat, de sorte qu'il se déforme dans son plan lors de l'écartement ou du rapprochement de touches 150 et 151 prévues en extrémité libre des bras de mesure articulés 121, 122. Ainsi, un écartement ou un rapprochement des deux touches 150 et 151 induit une rotation des deux bras de mesure articulés 121 et 122 autour de leur pivot, et par suite un mouvement axial selon une direction essentiellement perpendiculaire à l'axe X des touches (respectivement vers le haut ou vers le bas sur la figure 1) du bras central 125, comme schématisé par la flèche 400, ce qui permet de coopérer avec un capteur de déplacement associé (non visible ici) qui peut être par exemple disposé dans un logement associé 107 de la partie formant support 101.

Il convient de noter que l'élément monobloc déformable 120 illustré sur les figures 1 et 2 est plus élaboré qu'un simple élément ayant la forme générale d'un W complété par un bras central mobile axialement. Dans une telle version simplifiée du dispositif, on aurait alors une coopération directe entre le bras central 125 mobile axialement et le capteur de déplacement associé, alors que cette coopération est en l'espèce indirecte, dans la mesure où l'élément monobloc 120 illustré ici comporte un bras supplémentaire de raccordement 135.

Les deux bras de mesure 121 et 122 sont ici essentiellement parallèles en position neutre, ce qui permet un débattement angulaire dans un sens ou dans l'autre induisant un écartement ou un rapprochement des touches d'extrémités 150 et 151, comme schématisé sur la figure 2 par les flèches 401 et 402. Dans la pratique, la course maximale des touches, suivant leur axe X, sera relativement faible, par exemple inférieure à une centaine de micromètres. Les bras de mesure 121 et 122 pourraient être articulés directement sur la partie formant support 101, mais, pour des raisons de commodité de montage et de simplification de structure, chacun des deux bras de mesure 121 et 122 est ici articulé sur un bras de fixation associé 126 ou 127 qui assure en outre la fixation de l'élément monobloc déformable 120 à la partie formant support 101, fixation qui peut être par exemple assurée au moyen de vis 106.

En l'espèce, la partie formant support 101 est essentiellement plate, et présente un espace central 160 dans lequel est logé l'élément monobloc déformable 120. Plus précisément, la partie formant support 101 se présente sous la forme d'un boitier en plaquette, ce boîtier comportant une base 1O2 de laquelle partent deux branches 103 et 104. Les extrémités libres des bras de mesure 121 et 122 passent dans des canaux associés 110 et 111 prolongeant l'espace central 160. Un tel mode d'exécution pour la partie formant support 101 permet une réalisation extrêmement compacte et facilite considérablement l' utilisation du dispositif de contrôle. Par ailleurs, la réalisation plate permet une utilisation simultanée de plusieurs dispositifs de contrôle identiques, répartis le long de la pièce mécanique à contrôler. Une telle multiplication des contrôles n'était pas possible avec les dispositifs de contrôle antérieurs, du fait notamment de l'encombrement de ceux-ci.

La partie formant support 101 sera ci-après désignée sous le terme de boîtier.

Ainsi que cela a été dit plus haut, chacun des bras de mesure 121 et 122 est articulé sur un bras de fixation associé 126 ou 127, qui assure la fixation de l'élément monobloc déformable 120 au boîtier 101. Un moyen de rappel élastique peut être prévu pour tendre à rappeler chacun des bras de mesure 121 et 122 en position neutre. Le mode d'exécution illustré ici correspond à une structure qui est à la fois simple et compacte. En effet, chaque bras de mesure 121 et 122 est relié par un pont élastique 128 et 129 au bras de fixation associé, chacun de ces ponts élastiques formant l'articulation correspondante.

Dans le but de limiter l'encombrement latéral du dispositif de contrôle 100, on a en outre prévu d'une part une encoche allongée 108 et 109 dans chacune des branches 103 et 104 du boîtier 101, encoche qui permet de recevoir le bras de fixation associé 126 ou 127 de l'élément monobloc déformable 120. En outre, chaque bras de mesure 121 et 122 présente un décrochement 138 ou 139 au niveau de son pont élastique d'articulation 128 ou 129, de façon à être adjacent au bras de fixation associé 126 ou 127. Les ponts élastiques 128 et 129 sont ici prévus sensiblement au milieu de chacun des bras de mesure articulés 121 et 122, mais ceci ne constitue qu'un exemple avantageux qui n'a rien d'obligatoire.

Les branches 103 et 104 du boîtier 101 se raccordent à une partie centrale 105 de ce boîtier, partie centrale qui est en forme de berceau pour recevoir la pièce 300 à contrôler, le positionnement de cette pièce dans son berceau pouvant être rendu encore plus parfait grâce à deux appuis durs 155 ménagés en fond de berceau, ces appuis étant disposés symétriquement de telle façon que l'on soit assuré d'effectuer un contrôle sur un diamètre de la pièce et non sur une corde. Les branches 103 et 104 présentent, au voisinage de leur extrémité libre, un logement 112 et 113, pour recevoir un éventuel ressort 118, 119 associé aux touches 150 et 151 pour garantir une pression d'application constante de la bille d'extrémité de ces touches. Il convient de noter que les deux touches 150 et 151 sont ici vissées dans un filetage associé des extrémités des bras de mesure, en étant calées sur un axe commun X qui est perpendiculaire au plan médian P du boîtier 101 du dispositif de contrôle.

Les touches 150 et 151 saillent hors des branches 103 et 104 du boîtier 101, ici vers l'intérieur dans la mesure où le dispositif est illustré dans une application particulière au contrôle du diamètre extérieur d'une pièce cylindrique 300. Il est aisé de comprendre que les touches 150 et 151 peuvent aisément être disposées dans des directions opposées, en étant toujours calées sur l'axe X, afin que le contrôle concerne un alésage de pièces mécaniques (un tel renversement des deux touches est illustré en traits mixtes sur la figure 2). La figure 1 permet par ailleurs de distinguer deux tampons 114 et 115, en matière plastique (nylon par exemple) ou en métal tendre (aluminium ou laiton,par exemple), qui servent à la fois de guidage par l'inclinaison de leurs faces en regard, et de protection du boîtier.

Ainsi que cela a été dit plus haut, l'élément monobloc 101 comporte deux bras de mesure articulés 121 et 122 reliés par deux bras de liaison 123 et 124, en étant complétés à la jonction de ces bras de liaison par le bras central 125 mobile axialement. En l'espèce, les raccordements entre bras adjacents sont réalisés par des ponts élastiques analogues aux ponts élastiques 128 et 129 déjà décrits pour l'articulation des deux bras de mesure 121 et 122. C'est ainsi que les bras de liaison 123 et 124 sont articulés, au niveau d'une de leurs extrémités, aux bras de mesure associés 121 ou 122 par des ponts élastiques 130 et 131. De même, l'extrémité 134 du bras central 125 est raccordée à l'autre extrémité des deux bras de liaison 123 et 124 par des ponts élastiques associés 132 et 133.

Le bras central 125 n'est pas réalisé ici sous la forme d'un bras plongeur pouvant coopérer directement avec un capteur de déplacement associé, auquel cas un guidage de ce bras central par le boîtier eût dû être prévu, mais l'extrémité libre de ce bras central 125 est articulée sur un bras de raccordement 135 qui est lui-même articulé sur l'un des bras de fixation (ici le bras 126), et qui porte un moyen 145, ici réalisé sous la forme d'une simple pastille, pour coopérer avec un capteur de déplacement associé (non représenté ici). Le bras de raccordement 135 s'étend ici sensiblement perpendiculairement au bras de fixation associé 126 et au bras central 125 lorsque l'élément monobloc déformable est en position neutre, et ce bras de raccordement est relié aux deux bras précités 126 et 125 respectivement par des ponts élastiques 136 et 137 formant les articulations concernées, ces derniers ponts élastiques étant de préférence identiques aux autres ponts élastiques précédemment décrits. Ainsi, l'écartement ou le rapprochement des touches 150 et 151 produit un mouvement axial vers le haut ou vers le bas du bras central 125, et par suite un basculement vers le haut ou vers le bas, autour de l'articulation 136 associée, du bras de raccordement 135. Un tel basculement ne concerne que des angles très faibles, de sorte que la pastille 145 reste pratiquement dans le plan médian P du dispositif de contrôle lors du mouvement axial vers le haut ou vers le bas du bras central 125.

On est ainsi parvenu à réaliser de manière à la fois simple et efficace un autoguidage du bras central 125 par la structure même de l'élément monobloc déformable 120.

Les différents ponts élastiques mentionnés plus haut (en l'espèce huit ponts élastiques) sont très avantageux dans la mesure ou ils permettent de réaliser un ensemble déformable parfaitement monolithique, sans présence de ressorts de rappel ou de pivots d'articulation et de raccordement. Ainsi que cela est aisé à comprendre, une telle réalisation monolithique de l'ensemble déformable facilite considérablement le montage de cet ensemble dans son boîtier.

Il est par ailleurs possible de prévoir des systèmes de butées limitant le mouvement axial du bras central 125 lors de l'écartement ou du rapprochement des touches 150 et 151. En l'espèce, l'espace intérieur 160 du boîtier 101 présente deux bords transversaux parallèles 116 et 117 qui constituent des butées limitant le mouvement du bras central 125, le bord 116 coopérant avec l'extrémité 134 du bras 125 lors de la remontée de celui-ci (écartement des touches), et le bord 117 coopérant avec le bord adjacent du bras de raccordement 135 lors d'un mouvement vers le bas du bras 125 (rapprochement des touches). On distingue également deux picots saillants 140 et 141 prévus au voisinage de l'extrémité libre des bras de mesure articulés 121 et 122, ces picots suivant à limiter les débattements angulaires des bras de mesure.

Il convient de noter que les bras de mesure 121 et 122, les bras de liaison 123 et 124, et le bras central 125 de l'élément monobloc 120, admettent le plan médian P du boîtier 101 comme plan de symétrie et, ce quelle que soit la déformation de cet ensemble monobloc. L'équilibre du dispositif de contrôle est ainsi à tout moment respecté, ce qui garantit la constance et la fiabilité de la position neutre de repos de ce dispositif.

Pour réaliser l'élément monobloc déformable 120 illustré sur les figures 1 et 2, il est avantageux de faire appel à une technique telle que l'électro-érosion. De préférence, cet élément monobloc déformable est un élément métallique réalisé à partir d'une plaque de quelques millimètres d'épaisseur, par exemple 5 à 6 mm d'épaisseur. La précision requise, notamment pour la réalisation des ponts élastiques formant à la fois articulations et moyens de rappel, exige en effet un niveau de précision élevé dans la fabrication, niveau que l'on obtient aisément en faisant appel à une technique d'électro-érosion. On pourra en variante utiliser des techniques de coupe offrant un degré élevé de précision, comme la coupe au laser ou la coupe par jet d'eau à haute pression.

Le logement 107 prévu dans la base 102 du boîtier 101 sert à recevoir un capteur de déplacement qui peut être d'un type quelconque déjà connu, tel qu'un capteur à transformateur différentiel (également dénommé L.V.D.T.) ou encore un capteur capacitif par exemple. Par ailleurs, on n'a pas représenté sur la figure 1 les liaisons de raccordement menant des palpeurs de mesure à un organe central de traitement des contrôles effectués. De tels équipements et raccordements sont en effet bien connus de l'homme de métier, et ne nécessitent pas de description particulière à cet effet.

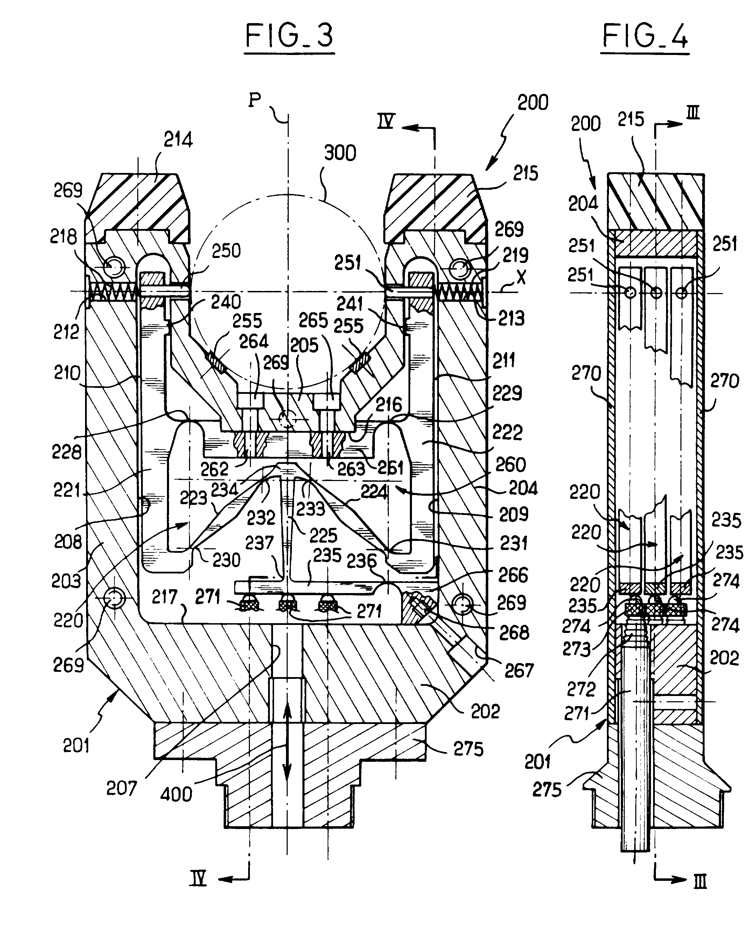

Les figures 3 et 4 illustrent un autre mode de réalisation du dispositif de contrôle selon l'invention.

Cette variante comporte de nombreux composants identiques ou analogues à ceux du dispositif 100 précédemment décrit, de sorte que l'on utilisera pour ces composants homologues les mêmes références mais augmentées de cent.

Le dispositif de contrôle 200 comporte un boîtier 201 qui est agencé pour loger plusieurs (ici trois) ensembles monoblocs déformables 220 identiques : ce dispositif permet ainsi une mesure simultanée de trois portées décalées axialement.

Chaque élément monobloc 220 comporte , comme pour le dispositif précédent, deux bras de mesure 221,222 reliés par deux bras de liaison 223, 224 pour former un W, avec un bras central 225 à déplacement axial, qui est, comme précédemment, articulé sur un bras de raccordement 235. Cependant, les bras de mesure 221, 22 sont ici essentiellement rectilignes et parallèles, et sont articulés aux deux extrémités d'une branche commune de raccordement 261 qui leur est sensiblement perpendiculaire, cette branche 261 assurant la fixation de l'élément monobloc 220 au boîtier 201. Les liaisons d'articulation sont de préférence réalisées par des ponts élastiques 228, 229 analogues aux ponts élastiques précédemment décrits. La fixation de l'ensemble monobloc 220 est ici assurée par boulonnage sur la partie centrale en forme de berceau 205 du boîtier 201 (on distingue les perçages filetés 262, 263 de la branche 261 et les alésages étagés 264, 265 de la partie en berceau 205 prévus à cet effet). La suppression des bras de fixation induit un agencement différent pour le bras de raccordement 235 : ce bras 235 est comme précédemment articulé à une extrémité du bras central 225 par un pont élastique 237, mais il est ici articulé à son autre extrémité sur un coin de retenue 266 fixé au boîtier 201 (on distingue le filetage borgne 268 associé à un boulon de fixation passant dans un alésage étagé 267 prévu dans l'angle concerné du boîtier 201. L'articulation sur le coin de retenue 266 est ici assurée par un pont élastique 236 analogue aux précédents.

Chaque ensemble monobloc déformable 220 présente des bras 223, 224, 225 qui ont ici une forme effilée, ceci pour que l'inertie soit aussi faible que possible.

Ainsi que cela est mieux visible sur la figure 4, le boîtier 201 est ici prévu pour recevoir trois ensembles monobloc 220 identiques. La base 202 du boîtier 201 comporte à cet effet trois passages 207 pour les capteurs de déplacement associés, ces passages étant en l'espèce décalés pour préserver la compacité du dispositif : la figure 4 permet de distinguer l'un 271 de ces capteurs, avec sa bille de tête 274 soudée sur une partie moletée 273 qui passe dans un soufflet d'étanchéité 272. Chacune des trois billes 274 est au contact du bras de raccordement 235 associé, pour assurer la coopération (schématisée par la flèche 400) entre l'ensemble monobloc 220 concerné et son capteur 271. Une embase inférieure 275 est ici fixée sous le boîtier 201, cette embase étant traversée par les capteurs 271, et étant filetée extérieurement pour pouvoir monter une poignée de préhension du dispositif.

Les trois ensembles monobloc 220 ainsi logés sont en outre protégés par deux flaques de fermeture 270 fixés de chaque côté du boîtier 201 (on distingue les cinq taraudages associés 269 sur la figure 3).

On est ainsi parvenu à réaliser un dispositif dont la structure permet de contrôler aussi bien des diamètres extérieurs que des alésages, tout en étant de précision élevée dans les deux cas. Le dispositif de contrôle selon l'invention est à la fois compact et aisé à monter.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Dispositif de contrôle de dimensions d'un objet, en particulier de diamètres extérieurs ou intérieurs de pièces mécaniques, du type comportant une partie formant support, ainsi qu'un système déformable élastiquement monté sur le support et comportant deux bras de mesure aux extrémités libres desquels est prévue une touche destinée à rentrer en contact avec la pièce à contrôler, ce système déformable coopérant avec un capteur de déplacement associé, caractérisé en ce que le système déformable se présente sous la forme d'un élément monobloc (120 ;220) ayant la forme générale d'un W, avec les deux bras de mesure (121,122 ; 221,222) articulés par rapport à la partie formant support (101 ; 201) et reliés par deux bras de liaison (123,124 ; 223,224), complété à la jonction de ces bras de liaison par un bras central (125 ; 225) mobile selon une direction axiale essentiellement perpendiculaire à l'axe des touches en fonction de l'écartement mutuel desdites touches pour coopérer avec le capteur de déplacement, ledit élément monobloc étant essentiellement plat et se déformant dans son plan lors de l'écartement ou du rapprochement des touches (150,151 ; 250,251) prévues en extrémité de ses bras de mesure articulés (121,122 ; 221, 222).

2. Dispositif de contrôle selon la revendication 1, caractérisé en ce que les deux bras de mesure (121,122) sont essentiellement parallèles en position neutre, et sont chacun articulés sur un bras de fixation associé (126,127) qui assure la fixation de l'élément monobloc déformable (120) à la partie formant support (101).

3. Dispositif de contrôle selon la revendication 2, caractérisé en ce que chaque bras de mesure (121, 122) est relié par un pont élastique (128,129) au bras de fixation associé (126,127).

4. Dispositif de contrôle selon la revendication 3, caractérisé en ce que chaque bras de mesure (121, 122) présente un décrochement (138,139) au niveau de son pont élastique (128,129), de façon à être adjacent au bras de fixation associé (126,127).

5. Dispositif de contrôle selon l'une des revendications 2 à 4, caractérisé en ce que l'extrémité libre du bras central (125) est articulée sur un bras de raccordement (135) qui est lui-même articulé sur l'un (126) des bras de fixation, et qui porte un moyen (145) pour coopérer avec un capteur de déplacement associé.

6. Dispositif de contrôle selon la revendication 5, caractérisé en ce que le bras de raccordement (135) s'étend sensiblement perpendiculairement au bras de fixation associé (126) et au bras central (125) en position neutre, en étant relié à ces bras par des ponts élastiques (136, 137).

7. Dispositif de contrôle selon la revendication 1, caractérisé par le fait que les deux bras de mesure, (221, 222) sont essentiellement rectilignes et parallèles, et sont articulés aux deux extrémités d'une branche commune de raccordement (261) qui leur est sensiblement perpendiculaire, et qui assure la fixation de l'élément monobloc (220) à la partie formant support (201).

8. Dispositif de contrôle selon la revendication 7, caractérisé par le fait que chaque bras de mesure (221, 222) est relié par un pont élastique (228, 229) à la branche commune de raccordement et de fixation (261).

9. Dispositif de contrôle selon la revendication 7 ou 8, caractérisé par le fait que l'extrémité libre du bras central (225) est articulée sur un bras de raccordement (235) qui est lui-même articulé sur un coin de retenue (266) fixé à la partie formant support (201).

10. Dispositif de contrôle selon la revendication 9, caractérisé par le fait que le bras de raccordement (235) s'étend sensiblement perpendiculairement au bras central (225) en position neutre, en étant relié à ce bras et au coin de retenue (266) par des ponts élastiques associés (237, 236).

11. Dispositif de contrôle selon l'une des revendications 1 à 10, caractérisé en ce que chacun des bras de liaison (123, 124 ; 223, 224) se raccorde au bras central (125 ; 225) par un pont élastique associé (132, 133 ; 232, 233).

12. Dispositif de contrôle selon l'une des revendications 1 à 11, caractérisé en ce que la partie formant support (101 ; 201) est essentiellement plate, et présente un espace central (160 ; 260) dans lequel est logé l'élément monobloc déformable (120 ; 220).

13. Dispositif de contrôle selon la revendication 12, caractérisé en ce que la partie formant support (101 ; 201) se présente sous la forme d'un boîtier en plaquette, ce boîtier comportant deux branches (103, 104 ; 203, 204) dans lesquelles passent les extrémités libres des bras de mesure (121, 122 ; 221, 222), les touches associées (150, 151 ; 250, 251) saillant hors de ces branches.

14. Dispositif de contrôle selon la revendication 12 ou la revendication 13, caractérisé en ce que l'espace central (160 ; 260) de la partie formant support (101 ; 201) présente deux bords transversaux parallèles (116, 117 ; 216, 217) dont l'un au moins constitue une butée limitant le mouvement du bras central (125 ; 225) lors de l'écartement ou du rapprochement des touches (150, 151 ; 250, 251).

15. Dispositif de contrôle selon l'une des revendications 1 à 14, caractérisé en ce que les bras de mesure (121,122 ; 221, 222), les bras de liaison (123,124 ; 223, 224) et le bras central (125 ; 225) de l'élément monobloc (120 ; 220) admettent le plan médian (P) de la partie formant support (101 ; 201) comme plan de symétrie, quelle que soit la déformation de cet élément monobloc.

16. Dispositif de contrôle selon l'une des revendications 1 à 15, caractérisé en ce que l'élément monobloc déformable (120 ; 220) avec ses éventuels bras supplémentaires (126, 127,135 ; 235, 261) est un élément métallique obtenu, par exemple par électro-érosion, à partir d'une plaque de quelques millimètres d'épaisseur.

17. Dispositif de contrôle selon l'une des revendications 1 à 16, caractérisé par le fait qu'il comporte une pluralité d'éléments monoblocs déformables (120 ; 220) empilés successivement dans une même partie formant support (101 ; 201).

## Patentansprüche

1. Vorrichtung zur Kontrolle der Abmessungen eines Objekts, insbesondere der Außen- oder Innendurchmesser mechanischer Teile, umfassend einen Abschnitt, der einen Träger bildet, sowie ein elastisch verformbares System, das an dem Träger montiert ist und zwei Meßarme hat, an deren freien Enden eine Backe vorgesehen ist, die dazu bestimmt ist, mit dem zu kontrollierenden Teil in Kontakt zu treten, wobei dieses verformbare System mit einem zugeordneten Bewegungsaufnehmer zusammenwirkt, dadurch **gekennzeichnet**, daß das verformbare System als ein Monoblockelement (120; 220) in der allgemeinen Form eines W vorgesehen ist, wobei die zwei Meßarme (121, 122; 221, 222) relativ zu dem Trägerabschnitt (101; 201) beweglich und durch zwei Verbindungsarme (123, 124; 223, 224) verbunden sind, und daß das Monoblockelement an der Verbindungsstelle der Verbindungsarme durch einen zentralen Arm (125; 225) ergänzt wird, der abhängig von dem gegenseitigen Abstand der Backen in einer axialen Richtung im wesentlichen senkrecht zur Achse der Backen bewegbar ist, um mit dem Bewegungsaufnehmer zusammenzuwirken, wobei das Monoblockelement im wesentlichen eben ist und sich im Zuge der Auseinanderbewegung oder der Annäherungsbewegung der Backen (150, 151; 250, 251), die an den Enden seiner beweglichen Meßarme (121, 122; 221, 222) vorgesehen sind, in seiner Ebene verformt.

2. Kontrollvorrichtung nach Anspruch 1, dadurch **gekennzeichnet**, daß die beiden Meßarme (121, 122) in der neutralen Position im wesentlichen parallel sind und daß deren jeder mit einem zugehörigen Befestigungsarm (126, 127), der für die Festlegung des verformbaren Monoblockelements (120) an dem Trägerabschnitt (101) sorgt, gelenkig verbunden ist.

3. Kontrollvorrichtung nach Anspruch 2, dadurch **gekennzeichnet**, daß jeder Meßarm (121, 122) durch einen elastischen Steg (128, 129) mit dem zugehörigen Befestigungsarm (126, 127) verbunden ist.

4. Kontrollvorrichtung nach Anspruch 3, **dadurch gekennzeichnet**, daß jeder Meßarm (121, 122) in Höhe seines elastischen Steges (128, 129) eine Ausbiegung (138, 139) dergestalt aufweist, daß der Meßarm dem zugehörigen Befestigungsarm (126, 127) benachbart ist.

5. Kontrollvorrichtung nach einem der Ansprüche 2 bis 4, dadurch **gekennzeichnet**, daß das freie Ende des zentralen Armes (125) mit einem Anschlußarm (135) gelenkig verbunden ist, der wiederum mit dem einen (126) der Befestigungsarme gelenkig verbunden ist und ein Mittel (145) trägt, um mit einem zugeordneten Bewegungsaufnehmer zusammenzuwirken.

6. Kontrollvorrichtung nach Anspruch 5, dadurch **gekennzeichnet**, daß sich der Anschlußarm (135) in der neutralen Position im wesentlichen senkrecht zu dem zugehörigen Befestigungsarm (126) und zu dem zentralen Arm (125) erstreckt und durch elastische Stege (136, 137) mit diesen Armen verbunden ist.

7. Kontrollvorrichtung nach Anspruch 1, dadurch **gekennzeichnet**, daß die beiden Meßarme (221, 222) im wesentlichen geradlinig und parallel verlaufend sind und daß sie mit den beiden Enden eines gemeinsamen Verbindungszweiges (261) gelenkig verbunden sind, der im wesentlichen senkrecht zu den Meßarmen angeordnet ist und für die Festlegung des Monblockelements (220) an dem Trägerabschnitt (201) sorgt.

8. Kontrollvorrichtung nach Anspruch 7, dadurch **gekennzeichnet**, daß jeder Meßarm (221, 222) durch einen elastischen Steg (228, 229) mit dem gemeinsamen Verbindungs- und Befestigungszweig (261) verbunden ist.

9. Kontrollvorrichtung nach Anspruch 7, dadurch **gekennzeichnet**, daß das freie Ende des zentralen Armes (225) mit einem Anschlußarm (235) gelenkig verbunden ist, der wiederum mit einem an dem Trägerabschnitt (201) befestigten Haltekeil (266) gelenkig verbunden ist.

10. Kontrollvorrichtung nach Anspruch 9, dadurch **gekennzeichnet**, daß sich der Anschlußarm (235) in der neutralen Position im wesentlichen senkrecht zu dem zentralen Arm (225) erstreckt und durch zugehörige elastische Stege (237, 236) mit diesem Arm und mit dem Haltekeil (266) verbunden ist.

11. Kontrollvorrichtung nach einem der Ansprüche 1 bis 10, dadurch **gekennzeichnet**, daß sich jeder der Anschlußarme (123, 124; 223, 224) über einen zugehörigen elastischen Steg (132, 133; 232, 233) an den zentralen Arm (125; 225) anschließt.

12. Kontrollvorrichtung nach einem der Ansprüche 1 bis 11, dadurch **gekennzeichnet**, daß der Trägerabschnitt (101; 201) im wesentlichen eben ist und einen zentralen Raum (160; 260) hat, in dem das verformbare Monoblockelement (120; 220) angeordnet ist.

13. Kontrollvorrichtung nach Anspruch 12, dadurch **gekennzeichnet**, daß der Trägerabschnitt (101; 201) in Form eines Plattengehäuses vorgesehen ist, das zwei Zweige (103, 104; 203, 204) hat, durch welche die freien Enden der Meßarme (121, 122; 221, 222) hindurchgeführt sind, wobei die damit verbundenen Backen (150, 151; 250, 251) aus diesen Zweigen hervorstehen.

14. Kontrollvorrichtung nach Anspruch 12 oder 13, dadurch **gekennzeichnet**, daß der zentrale Raum (160; 260) des Trägerabschnitts (101; 201) zwei quer verlaufende parallele Ränder (116, 117; 216, 217) hat, deren zumindest einer einen Anschlag bildet, der die Bewegung des zentralen Armes (125; 225) während der Auseinanderbewegung oder der Annäherungsbewegung der Backen (150, 151; 250, 251) begrenzt.

15. Kontrollvorrichtung nach einem der Ansprüche 1 bis 14, dadurch **gekennzeichnet**, daß die Meßarme (121, 122; 221, 222), die Verbindungsarme (123, 124; 223, 224) und der zentrale Arm (125; 225) des Monoblockelements (120; 220) die Mittelebene (P) des Trägerabschnittes (101; 201) als Symmetrieebene annehmen, ungeachtet dessen, wie die Verformung dieses Monoblockelements geartet ist.

16. Kontrollvorrichtung nach einem der Ansprüche 1 bis 15, dadurch **gekennzeichnet**, daß das verformbare Monoblockelement (120; 220) mit seinen möglichen zusätzlichen Armen (126, 127, 135; 235, 261) ein metallisches Element ist, das zum Beispiel durch ElektroErosion aus einer Platte mit einer Dicke von einigen Millimetern gewonnen wird.

17. Kontrollvorrichtung nach einem der Ansprüche 1 bis 16, dadurch **gekennzeichnet**, daß sie eine Vielzahl von verformbaren Monoblockelementen (120; 220) aufweist, die in demselben Trägerabschnitt (101; 201) aufeinanderfolgend gestapelt sind.

## Claims

1. An inspection device for inspecting the dimensions of an object, in particular inside or outside diameters of workpieces, the device being of the type comprising a support-forming portion together with a deformable system resiliently mounted on the support and comprising two measurement arms having free ends provided with respective contactors intended to come into contact with the piece to be inspected, said deformable system co-operating with an associated displacement sensor, the device being characterized in that the deformable system is in the form of a one-piece element (120; 220) that is generally W-shaped, having two measurement arms (121, 122; 221, 222) hinged relative to the support-forming portion (101; 201) and connected together by two link arms (123, 124; 223, 224) associated with a central arm (125; 225) connected to the junction between said link arms, said central arm being movable in axial direction essentially perpendicular to the axis of the contactors as a function of the mutual separation between said contactors, in order to co-operate with the displacement sensor, and said one-piece element being essentially flat and deforming within its own plane when the contactors (150, 151; 250, 251) provided at the ends of its hinged measurement arms (121, 122; 221, 222) move away from each other or towards each other.

2. An inspection device according to claim 1, characterized in that the two measurement arms (121, 122) are essentially parallel in a neutral position, and each of them is hinged on an associated fixing arm (126, 127) which serves to fix the deformable one-piece element (120) to the support-forming portion (101).

3. An inspection device according to claim 2, characterized in that each measurement arm (121, 122) is connected by a resilient bridge (128, 129) to the associated fixing arm (126, 127).

4. An inspection device according to claim 3, characterized in that each measurement arm (121, 122) has a kink (138, 139) level with its resilient bridge (128, 129) so as to enable it to lie adjacent to the associated fixing arm (126, 127).

5. An inspection device according to any one of claims 2 to 4, characterized in that the free end of the central arm (125) is hinged to a coupling arm (135) which is itself hinged to one (126) of the fixing arms, and which carries means (145) for co-operating with an associated displacement sensor.

6. An inspection device according to claim 5, characterized in that when in the neutral position, the coupling arm (135) extends substantially perpendicularly to the associated fixing arm (126) and to the central arm (125), being connected to said arms via resilient bridges (136, 137).

7. An inspection device according to claim 1, characterized by the fact that the two measurement arms (221, 222) are essentially rectilinear and parallel, and are hinged to the two ends of a common coupling branch (261) which is substantially perpendicular thereto, and which serves to fix the one-piece element (220) to the support-forming portion (201).

8. An inspection device according to claim 7, characterized by the fact that each measurement arm (221, 222) is connected via a resilient bridge (228, 229) to the common coupling and fixing branch (261).

9. An inspection device according to claim 7 or 8, characterized by the fact that the free end of the central arm (225) is hinged on a coupling arm (235) which is itself hinged to a retaining wedge (266) fixed to the support-forming portion (201).

10. An inspection device according to claim 9, characterized by the fact that, when in the neutral position, the coupling arm (235) extends substantially perpendicularly to the central arm (225), being connected to said arm and to the retaining wedge (266) by associated resilient bridges (237, 236).

11. An inspection device according to any one of claims 1 to 10, characterized in that each of the link arms (123, 124; 223, 224) is connected to the central arm (125; 225) by an associated resilient bridge (132, 133; 232, 233).

12. An inspection device according to any one of claims 1 to 11, characterized in that the support-forming portion (101; 201) is essentially flat, having a central space (160; 260) in which the deformable one-piece element (120; 220) is received.

13. An inspection device according to claim 12, characterized in that the support-forming portion (101; 201) is in the form of a plate-shaped housing, said housing having two branches (103, 104; 203, 204) in which the free ends of the measurement arms (121, 122; 221, 222) are received, the associated contactors (150, 151; 250, 251) projecting from said branches.

14. An inspection device according to claim 12 or claim 13, characterized in that the central space (160; 260) of the support-forming portion (101; 201) has two parallel transverse edges (116, 117; 216, 217), at least one of which constitutes an abutment limiting the movement of the central arm (125; 225) when the contactors (150, 151; 250, 252) move apart from each other or towards each other.

15. An inspection device according to any one of claims 1 to 14, characterized in that the measurement arms (121, 122; 221, 222), the link arms (123, 124; 223, 224), and the central arm (125; 225) of the one-piece element (120; 220) together have a plane of symmetry constituted by the median plane (P) of the support-forming portion (101; 201), regardless of the deformation of the one-piece element.

16. An inspection device according to any one of claims 1 to 15, characterized in that the deformable one-piece element (120; 220) together with any optional additional arms thereof (126, 127, 135; 235, 261,) is an element made of metal and obtained from a plate having a thickness of a few millimeters, e.g. by electro-erosion.

17. An inspection device according to any one of claims 1 to 16, characterized by the fact that it includes a plurality of deformable one-piece elements (120; 220) stacked successively in a common support-forming portion (101; 201).
